# EUROPÄISCHE PATENTSCHRIFT

(11) **EP 0 676 916 B1**
(45) Veröffentlichungstag und Bekanntmachung des Hinweises auf die Patenterteilung: **17.07.1996**
(21) Anmeldenummer: 94909041.9
(22) Anmeldetag: 24.02.1994
(51) Int. Cl.: A01J 5/14, F16K 31/06

(54) **VORSTEUERVENTIL**
PILOT VALVE
SOUPAPE PILOTE

(30) Priorität: 15.04.1993 DE 4312276
(43) Veröffentlichungstag der Anmeldung: 18.10.1995
(73) Patentinhaber: Westfalia Separator AG, D-59302 Oelde (DE)
(72) Erfinder: KRONE, Otto, D-49832 Beesten (DE)
(86) Internationale Anmeldenummer: EP9400528
(87) Internationale Veröffentlichungsnummer: WO9423563

(56) Entgegenhaltungen:
- CH-A- 264 710
- DE-A- 2 245 069
- DE-C- 511 341
- DE-U- 9 114 953
- GB-A- 1 559 836
- US-A- 4 196 751

## Beschreibung

Die Erfindung betrifft ein Vorsteuerventil zur Betätigung eines pneumatisch betätigten Hauptventiles in Pulsatoren für Melkanlagen, mit einem Elektromagneten, der alternierend erregt und entregt wird zwecks Bewegung eines Ankers zwischen seinen Endlagen, in denen er abwechselnd den Verschluß einer Luftleitung oder einer Unterdruckleitung bewirkt und die Leitungen dadurch abwechselnd mit einer ersten Ventilkammer verbunden werden, die über einen Steuerkanal mit dem Hauptventil in Verbindung steht, wobei der Anker mit einer Membrane derart verbunden ist, daß eine reibungsfreie, axiale Führung des Ankers erzielt wird.

Ein derartiges Ventil ist beispielsweise aus der US-A-4196751 bekannt. Bei diesem Ventil ist die Membrane auf der dem Elektromagneten gegenüberliegenden Seite des Ankers vorgesehen. Damit ein Verschluß der Luftleitung bewirkt wird, ist der Anker an seiner Oberfläche mit einer geeigneten Dichtung versehen. Außerdem ist die Membrane als Federeinheit ausgebildet, die der Bewegung des Ankers in Richtung auf die Luftleitung einen erheblichen Widerstand entgegensetzt. Um diesen Widerstand zu überwinden sind erhöhte Schaltkräfte erforderlich.

Aus der DE-U-9114953 ist ein Ventil bekannt, bei dem der Anker durch eine Membrane geführt wird. Bei diesem Ventil ist die Membrane auf der dem Elektromagneten gegenüberliegenden Seite des Ankers vorgesehen. Wird der Magnet erregt, so wird der Anker gegen den Magneten gezogen, wo er durch Remanenzkräfte festgehalten wird. Dadurch sind erhöhte Schaltkräfte erforderlich, um die Remanenzkräfte zu überwinden. Mit diesem Ventil kann außerdem nur der Durchfluß eines Mediums gesteuert werden, so daß es sich nicht dazu eignet, einen Steuerkanal abwechselnd mit einer Luftleitung und einer Unterdruckleitung zu verbinden.

In der DE-OS 22 45 069 wird ein Ventil beschrieben, bei dem der Anker aus einem zylindrischen Bolzen besteht, der innerhalb eines Durchlasses des Elektromagneten und in einer im Ventil vorgesehenen Öffnung axial geführt wird. Dadurch sind Reibungskräfte unvermeidlich, die zu Verschleiß führen können und die zu einer Erhöhung der Schaltkräfte führen. Es kann sich aber auch zwischen dem Anker und den ihn führenden Flächen Schmutz absetzen, der den Anker blockiert.

Der Erfindung liegt die Aufgabe zugrunde, ein Vorsteuerventil zu schaffen, das sich kostengünstig herstellen läßt und geringe Schaltkräfte benötigt.

Diese Aufgabe wird dadurch gelöst, daß die Membrane aus einem elastischen Werkstoff besteht und zwischen dem Anker und dem Elektromagneten angeordnet ist, wodurch die Membrane die Luftleitung in einer ihrer Endlagen abdichtend verschließt.

Durch die Verwendung einer Membrane aus elastischem Werkstoff wird eine kraftarme Beweglichkeit des Ankers erreicht. Die Anordnung der Membrane zwischen dem Anker und dem Elektromagneten verhindert, daß der Anker durch Remanenzkraft am Elektromagneten hängen bleibt. Die Membrane muß in diesem Fall aus einem nichtmagnetischen Material bestehen, z. B. Gummi. Wegen der fehlenden Reibung und der Ausschaltung der Remanenzkraft sind die Schaltkräfte sehr gering. Da die Membrane die Luftleitung abdichtend verschließen kann, ist eine zusätzliche Dichtung nicht erforderlich, wodurch sich eine kostengünstige Lösung ergibt.

Bei einer vorteilhaften Ausgestaltung erfolgt die Verbindung zwischen Anker und Membrane durch einen an der Membrane vorgesehenen Ansatz und einer in dem Anker vorgesehenen Bohrung. Dies ermöglicht nicht nur eine preisgünstige Verbindung, sondern erspart auch eine zusätzliche Dichtung, weil der Ansatz in einer Endlage des Ankers die Unterdruckleitung verschließt.

Bei einer weiteren vorteilhaften Ausgestaltung ist die Membrane mit einem Luftdurchlaß versehen, über den die erste Ventilkammer mit einer zweiten Ventilkammer in Verbindung steht, in die die Luftleitung mündet.

Ein gesonderter Verbindungskanal kann damit entfallen.

Es ist vorteilhaft, die Membrane mit einem Dichtwulst zu versehen, der die Ventilkammern zur Atmosphäre abdichtet. Dadurch sind keine zusätzlichen Dichtungen erforderlich.

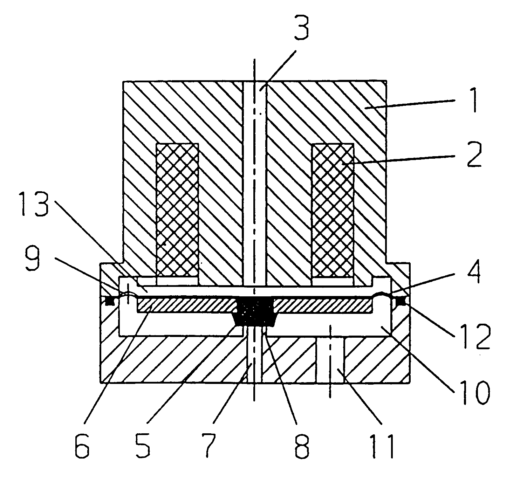

Ein Ausführungsbeispiel der Erfindung ist in der Zeichnung dargestellt und wird nachstehend näher erläutert.

Mit 1 ist in der Zeichnung das Ventil bezeichnet, dessen Elektromagnet 2 mit einer Luftleitung 3 versehen ist, die durch eine Membrane 4 verschließbar ist. Die Membrane 4 ist mit einem Ansatz 5 versehen, der den Anker 6 vollständig durchdringt und ihn formschlüssig mit der Membrane 4 verbindet. Eine Unterdruckleitung 7 mit einem Ventilsitz 8 wird durch den Ansatz 5 in einer Endlage des Ankers 6 verschlossen. Die Membrane 4 ist mit einem Durchlaß 9 versehen, über den die Luftleitung 3 mit einer ersten Ventilkammer 10 verbindbar ist, von der ein Steuerkanal 11 ausgeht. An ihrem Umfang ist die Membrane 4 mit einem Dichtwulst 12 versehen, der die erste Ventilkammer 10 und eine zweite Ventilkammer 13, in die die Luftleitung 3 mündet, zur Atmosphäre abdichtet.

Wenn der Elektromagnet 2 entregt ist, bewegt sich der Anker 6 in die in der Figur dargestellte Endlage, wobei der Ansatz 5 die Unterdruckleitung 7 verschließt. Die Luftleitung 3, die zweite Ventilkammer 13 und die erste Ventilkammer 10 sind jetzt über den Durchlaß 9 verbunden, so daß atmosphärische Luft über den Steuerkanal 11 zu einem nichtdargestellten, pneumatisch betätigten Hauptventil strömen kann, um dieses umzuschalten. Auf die Oberseite der Membrane 4 wirkt während dieses Schaltvorganges die Luftströmung und der sich aufbauende Atmosphärendruck, der wegen des erforderlichen Druckgefälles großer ist als der Druck an der Unterseite der Membrane 4. Dadurch wird der Anker 6 unabhängig von der Einbauposition des Ventils 1 in Richtung des Ventilsitzes 8 der Unterdruckleitung 7 bewegt. Wird der Elektromagnet 2 erregt, so wird der Anker 6 mit der Membrane 4 aufwärts bewegt und gegen den Elektromagneten 2 zur Anlage gebracht. In dieser Stellung wird die Luftleitung 3 durch die Membrane 4 verschlossen und die Unterdruckleitung 7 geöffnet, wodurch sich der Unterdruck von der Unterdruckleitung 7 über die erste Ventilkammer 10 auf den Steuerkanal 11 und damit auf das Hauptventil überträgt und dessen erneute Umschaltung bewirkt. Diese Umschaltungen erfolgen in einem vorbestimmten Rhythmus zur Erzeugung eines alternierenden Druckes in den Zwischenräumen von nichtdargestellten Melkbechern, wobei häufig auch zwei gegenläufig arbeitende Ventile vorgesehen sind zur Durchführung des sogenannten Wechseltaktmelkens.

Da die Membrane 4 die Dichtfunktion in beiden Endlagen des Ankers 6 übernimmt und außerdem die Ventilkammern 10 und 13 zur Atmosphäre abdichtet, ist bei Verschleiß oder Alterung nur die Membrane 4 auszutauschen.

## Patentansprüche

1. Vorsteuerventil zur Betätigung eines pneumatisch betätigten Hauptventiles in Pulsatoren für Melkanlagen, mit einem Elektromagneten (2), der alternierend erregt und entregt wird zwecks Bewegung eines Ankers (6) zwischen seinen Endlagen, in denen er abwechselnd den Verschluß einer Luftleitung (3) oder einer Unterdruckleitung (7) bewirkt und die Leitungen (3, 7) dadurch abwechselnd mit einer ersten Ventilkammer (10) verbunden werden, die über einen Steuerkanal (11) mit dem Hauptventil in Verbindung steht, wobei der Anker (6) mit einer Membrane (4) derart verbunden ist, daß eine reibungsfreie, axiale Führung des Ankers (6) erzielt wird, **dadurch gekennzeichnet**, daß die Membrane (4) aus einem elastischen Werkstoff besteht und zwischen dem Anker (6) und dem Elektromagneten (2) angeordnet ist, wodurch die Membrane die Luftleitung (3) in einer ihrer Endlagen abdichtend verschließt.

2. Vorsteuerventil nach Anspruch 1, dadurch gekennzeichnet, daß die Verbindung zwischen Anker (6) und Membrane (4) durch einen an der Membrane (4) vorgesehenen Ansatz (5) erfolgt.

3. Vorsteuerventil nach Anspruch 2, dadurch gekennzeichnet, daß der Ansatz (5) in einer Endlage des Ankers (6) die Unterdruckleitung (7) verschließt.

4. Vorsteuerventil nach einem der Ansprüche 1 bis 3, dadurch gekennzeichnet, daß die Membrane (4) mit einem Luftdurchlaß (9) versehen ist, über den die erste Ventilkammer (10) mit einer zweiten Ventilkammer (13) in Verbindung steht, in die die Luftleitung (3) mündet.

5. Vorsteuerventil nach einem der Ansprüche 1 bis 5, dadurch gekennzeichnet, daß die Membrane (4) mit einem Dichtwulst (12) versehen ist, der die Ventilkammern (10, 13) zur Atmosphäre abdichtet.

## Claims

1. Pilot valve for actuating a pneumatically controlled main valve in pulsators for milking installations with an electromagnet (2) which is alternately energised and deenergised for the purpose of moving an armature (6) between its end positions in which it alternately seals an air line (3) or a vacuum line (7) and by this means connects lines (3, 7) alternately with a first valve chamber (10) which is connected with the main valve via a control channel (11), whereby the armature (6) is connected with a diaphragm (4) in such a way that a frictionless, axial guiding of the armature (6) is achieved, **characterised in that** the diaphragm (4) is made of an elastic material and is arranged between the armature (6) and the electromagnet (2) by which means the diaphragm seals the air line (3) in one of its end positions.

2. Pilot valve according to claim 1, characterised in that the connection between armature (6) and diaphragm (4) is effected by a projection (5) provided on the diaphragm (4).

3. Pilot valve according to claim 2, characterised in that the projection (5) seals the vacuum line (7) in one end position of the armature (6).

4. Pilot valve according to one of the claims 1 to 3, characterised in that the diaphragm (4) is provided with an air duct via which the first valve chamber (10) is connected to a second valve chamber (13) into which the air line (3) opens up.

5. Pilot valve according to one of the claims 1 to 4, characterised in that the diaphragm (4) is provided with a sealing rim (12) which seals off the valve chambers (10, 13) from the atmosphere.

## Revendications

1. Vanne pilote destinée à l'actionnement d'une vanne principale pneumatique incorporée dans des pulsateurs faisant partie d'installations de traite, comportant un électro-aimant (2) qui est excité et désexcité alternativement dans le but de faire mouvoir un induit (6) d'une position finale à l'autre, ainsi effectuant la fermeture soit d'une ligne d'air (3) soit d'une ligne de vide (7) de façon que les lignes (3, 7) sont reliées alternativement avec une chambre de vanne (10) communiquant avec la vanne principale à travers un canal de commande (11), l'induit (6) étant relié à une membrane (4) de manière à assurer le guidage axial exempt de frottement de l'induit (6), **caractérisée en ce que** la membrane (4) consiste d'un matériau élastique et est disposée entre l'induit (6) et l'électro-aimant (2), permettant à la membrane de fermer de manière étanche la conduite d'air (3) quand elle se trouve dans l'une de ses positions finales.

2. Vanne pilote selon la revendication 1, caractérisée en ce que la liaison entre l'induit (6) et la membrane (4) s'effectue grâce à une saillie (5) prévue au niveau de la membrane (4).

3. Vanne pilote selon la revendication 2, caractérisée en ce que la sailleie (5) ferme la conduite de vide (7) quand l'induit (6) se trouve dans l'une de ses positions finales.

4. Vanne pilote selon l'une des revendications 1 à 3, caractérisée en ce que la membrane (4) est pourvue d'un passage d'air (9) communiquant, par l'intermédiaire de la première chambre de vanne (10), avec une deuxième chambre de vanne (13) dans laquelle débouche la conduite d'air (3).

5. Vanne pilote selon l'une des revendications 1 à 4, caractérisée en ce que la membrane (4) est munie d'un renforcement (12) étanchant les chambres de vanne (10, 13) envers l'atmosphère.
